(19) Europäisches Patentamt / European Patent Office / Office européen des brevets

(11) **EP 2 980 177 A1**

(12) **EUROPEAN PATENT APPLICATION**
published in accordance with Art. 153(4) EPC

(43) Date of publication:
**03.02.2016  Bulletin 2016/05**

(21) Application number: **14776419.5**

(22) Date of filing: **17.03.2014**

(51) Int Cl.:
*C09J 7/02* (2006.01)   *B32B 27/00* (2006.01)
*B60C 19/00* (2006.01)   *C09J 7/04* (2006.01)
*C09J 201/00* (2006.01)

(86) International application number:
**PCT/JP2014/057056**

(87) International publication number:
**WO 2014/156744 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.03.2013  JP 2013069044**
**28.03.2013  JP 2013069046**

(71) Applicant: **Lintec Corporation**
**Tokyo 173-0001 (JP)**

(72) Inventor: **YAMAGISHI Masanori**
**Tokyo 173-0001 (JP)**

(74) Representative: **Patentanwälte Bressel und Partner mbB**
**Potsdamer Platz 10**
**10785 Berlin (DE)**

(54) **ADHESIVE SHEET FOR TIRE, METHOD OF PRODUCING ADHESIVE SHEET FOR TIRE AND METHOD OF USE OF ADHESIVE SHEET FOR TIRE**

(57)    Provided are an adhesive sheet for a tire, which can finely conform to spews or concavities and convexities on the surface and can prevent lifting and peeling of the adhesive sheet, regardless of whether the adhesion is achieved by hand or by an automatic label applicator; a method of producing an adhesive sheet for a tire; and a method of using an adhesive sheet for a tire.

Disclosed is an adhesive sheet for a tire, the adhesive sheet including a substrate and an adhesive layer, in which the Gurley bending resistance of the substrate in the machine direction according to JIS L 1085 (1998) has a value within the range of 0.10 to 0.40 mN, and the Gurley bending resistance in the cross direction has a value within the range of 0.10 to 0.50 mN.

FIG.3 ( a )
FIG.3 ( b )
FIG.3 ( c )

**Description**

TECHNICAL FIELD

The present invention relates to an adhesive sheet for a tire, a method of producing an adhesive sheet for a tire, and a method of using an adhesive sheet for a tire. More particularly, the invention relates to an adhesive sheet for a tire having satisfactory attachability and adhesiveness even when an automatic label applicator is used, a method of producing an adhesive sheet for a tire, and a method of using an adhesive sheet for a tire.

BACKGROUND ART

Conventionally, there have been known adhesive sheets for tires, which are also called tire display labels and the like, and these are adhesive sheets which are provided with indicator such as the manufacturer's name or brand name of the tire, size (width, aspect ratio, and rim ratio), and precautions for use in order to transmit tire information to a customer or arouse customer interest, and are used by being attached to the circumference including the ground contact surface of a tire (tread surface). That is, such a tire adhesive sheet generally uses a film including a vapor deposited aluminum layer as a support, and the adhesive sheet for a tire is configured such that an adhesive layer containing a rubber-based resin or an alkyl acrylate as a main component is laminated on such a support.
Furthermore, it has been a mainstream practice that at the time of shipping of tires, adhesive sheets for tires are adhered one by one onto the tread surfaces and the like of tires by human hand.
This is because, since tread surfaces of tires have very large concavities and convexities formed thereon, and there are whisker-like protrusions called "spews", which are formed due to the air vent holes of the mold used at the time of tire molding, it has been efficient to paste the adhesive sheets for tires by human hand in order to attach the adhesive sheets with high accuracy.
However, in recent years, for the purpose of further efficiency enhancement and automation of production, automatic label applicators called labelers that automatically adhere adhesive sheets for tires onto tires, have been introduced, and there is a demand for an adhesive sheet that can be adhered even by labelers.
Thus, for example, there has been disclosed an adhesive sheet for a tire, which includes a substrate and an adhesive layer, and in which the adhesive layer contains a hot melt type adhesive composition and has predetermined adhesive characteristics (see, for example, Patent Document 1).
That is, Patent Document 1 discloses an adhesive sheet for a tire which includes a hot melt type adhesive composition configured to have predetermined mixing proportions, and particularly contains two or more kinds of tackifiers having different softening points as tackifiers.
Furthermore, for example, there has been disclosed an adhesive sheet for a tire, which includes a substrate and an adhesive layer, and in which the adhesive layer contains a hot melt type adhesive composition and also has predetermined adhesive characteristics (see, for example, Patent Document 2).
That is, Patent Document 2 discloses an adhesive sheet for a tire which includes a hot melt type adhesive composition configured to have predetermined mixing proportions, and contains at least a predetermined polymerized rosin ester and another predetermined tackifying resin as tackifiers.
On the other hand, an adhesive sheet for a tire, which includes an anchor coating layer, a vinylidene chloride-vinyl chloride copolymer layer, and an adhesive layer having predetermined adhesive force on the surface of a polypropylene film containing a white pigment as a substitute for a polyester film that is generally used as a substrate, has been disclosed (see, for example, Patent Document 3).
That is, Patent Document 3 discloses an adhesive sheet for a tire that uses a support sheet mainly composed of polypropylene, so that the adhesive sheet for a tire can be adhered flexibly to the tread surface of a tire or the like.

CITATION LIST

PATENT DOCUMENT

Patent Document 1: WO 2005/037945 (Claims)
Patent Document 2: WO 2006/070529 (Claims)
Patent Document 3: JP 2002-294187 A (Claims, specification)

DISCLOSURE OF THE INVENTION

PROBLEM TO BE SOLVED BY THE INVENTION

However, it has been found that the adhesive sheets for tires described in Patent Document 1 and Patent Document 2 exhibit satisfactory tire adhesive characteristics from high temperatures to low temperature, and can be adhered without any problem when the adhesive sheets are adhered to tires by human hand; however, the adhesive sheets are likely to have problems when the adhesive sheets are to be adhered by means of an automatic label applicator.

This is because, in the case of adhesion by means of an automatic label applicator, since pressure is applied evenly upon adhesion, it is difficult to make an adhesive sheet to finely conform to a tire surface having spews or concavities and convexities on the surface as compared to adhesion by hand, and there has been a problem that lifting and peeling may easily occur after adhesion.

Furthermore, the adhesive sheet for a tire described in Patent Document 3 is intended to carry out an application process using a solvent when the adhesive layer is laminated, and to remove the solvent by a drying process; however, there is a problem that the production process may be increased in scale, or the production time may be lengthened. Particularly, in a case in which the adhesive sheet for a tire is provided even partially with a vinylidene chloride-vinyl chloride copolymer layer, there occurs an environmental problem that dioxin is prone to be generated at the time of incineration.

Thus, the inventors of the present invention conducted a thorough investigation, and as a result, the inventors conducted a further study on the substrate and thereby found that the problem of lifting and peeling after adhesion can be easily solved regardless of whether adhesion is achieved by hand or by an automatic label applicator.

That is, it is an object of the present invention to provide an adhesive sheet for a tire which can finely conform to spews or concavities and convexities on the surface and can prevent lifting and peeling of the adhesive sheet regardless of whether the adhesion is achieved by hand or by an automatic label applicator, a method of producing an adhesive sheet for a tire, and a method of using an adhesive sheet for a tire.

MEANS FOR SOLVING PROBLEM

According to an aspect of the present invention, there is provided an adhesive sheet for a tire, which includes a substrate and an adhesive layer, and in which the Gurley bending resistance of the substrate in the machine direction (MD) according to JIS L 1085 (1998) (can also be measured according to the standards of TAPPI T-543; the same applies in the following) has a value within the range of 0.10 to 0.40 mN, and thus the problems described above can be solved.

That is, when the substrate has predetermined Gurley bending resistance, even if an automatic label applicator that applies a certain even pressure is used, the adhesive sheet for a tire can be adhered uniformly onto a tire surface so as to finely conform to spews or concavities and convexities.

Furthermore, on the occasion of configuring the adhesive sheet for a tire of the present invention, it is preferable that the Gurley bending resistance of the substrate in the cross direction (CD) according to JIS L 1085 (1998) has a value within the range of 0.10 to 0.50 mN.

When such a configuration is adopted, the adhesive sheet for a tire can be adhered to a tire surface more efficiently with an automatic label applicator, without considering directionality.

Furthermore, on the occasion of configuring the adhesive sheet for a tire of the present invention, it is preferable that the adhesive force according to JIS Z 0237 (2000) against a studless tire having the adhesive sheet for a tire adhered thereto with an automatic label applicator at an adhesion pressure of 0.5 MPa, has a value within the range of 8 to 15 N/25 mm.

Furthermore, on the occasion of configuring the adhesive sheet for a tire of the present invention, it is preferable that the substrate includes at least a plastic film or a synthetic paper.

When such a configuration is adopted, an adhesive sheet for a tire having excellent mechanical strength can be obtained, and even if an automatic label applicator is used, the adhesive sheet can be adhered to a tire surface efficiently.

On the occasion of configuring the adhesive sheet for a tire of the present invention, it is preferable that the substrate is a single-layered substrate or a laminated substrate.

When such a configuration is adopted, multiple kinds of adhesive sheets for tires having predetermined Gurley bending resistance can be obtained in accordance with the purpose.

Furthermore, on the occasion of configuring the adhesive sheet for a tire of the present invention, it is preferable that when the substrate is a laminated substrate, the substrate includes at least a Gurley bending resistance-regulated film.

When such a configuration is adopted, the Gurley bending resistance of the substrate can be suitably regulated.

Furthermore, on the occasion of configuring the adhesive sheet for a tire of the present invention, it is preferable that the Gurley bending resistance-regulated film is a polypropylene film or a polyethylene terephthalate film.

When such a configuration is adopted, the Gurley bending resistance of the substrate can be regulated suitably.

Furthermore, on the occasion of configuring the adhesive sheet for a tire of the present invention, it is preferable that the substrate includes a colored layer.

When such a configuration is adopted, tire information or the like can be printed on the adhesive sheet for a tire, irrespective of the kind of the substrate.

Furthermore, on the occasion of configuring the adhesive sheet for a tire of the present invention, it is preferable that the adhesive layer contains a hot melt type adhesive composition.

When such a configuration is adopted, it is unnecessary to use a solvent or dry up a solvent when the adhesive layer is laminated, and the scale of the production apparatuses can be reduced, or the production time can be shortened.

Furthermore, according to another aspect of the present invention, there is provided a method of producing an adhesive sheet for a tire, which includes a substrate and an adhesive layer, and in which the Gurley bending resistance of the substrate in the machine direction according to JIS L 1085 (1998) has a value within the range of 0.10 to 0.40 mN, the method including the following steps (1) and (2):

(1) a step of preparing a substrate and an adhesive layer; and
(2) a step of forming the adhesive layer on the substrate.

When the method is carried out as such, an adhesive sheet for a tire having predetermined bending resistance can be produced efficiently.

More specifically, an adhesive sheet for a tire which can be adhered so as to conform to a tire surface having fine concavities and convexities, regardless of whether the adhesive sheet is adhered by hand or by an automatic label applicator, can be produced efficiently.

Furthermore, according to another aspect of the present invention, there is provided a method of using an adhesive sheet for a tire, which includes a substrate and an adhesive layer, the method including adhering an adhesive sheet for a tire having a substrate whose Gurley bending resistance in the machine direction according to JIS L 1085 (1998) has a value within the range of 0.10 to 0.40 mN, to the ground contact surface or lateral surface of a tire by hand or by an automatic label applicator.

By using an adhesive sheet for a tire as such, the adhesive sheet for a tire can be adhered to a tire surface having fine concavities and convexities so as to conform to the tire surface, regardless of whether the adhesive sheet is adhered by hand or by an automatic label applicator.

BRIEF DESCRIPTION OF DRAWINGS

Figs. 1 (a) to 1(d) are diagrams provided to respectively explain the configurations of adhesive sheets for tires.
Figs. 2(a) to 2(d) are diagrams provided to respectively explain different configurations of adhesive sheets for tires.
Figs. 3(a) to 3(c) are diagrams provided to explain the relationship between the Gurley bending resistance in the machine direction and the adhesive force after adhesion by an automatic label applicator.
Figs. 4(a) to 4(c) are diagrams provided to explain the relationship between the Gurley bending resistance in the machine direction, the adhesive force after adhesion by an automatic label applicator, and the adhesive force after adhesion by hand.
Figs. 5(a) to 5(c) are diagrams provided to explain the relationship between the Gurley bending resistance in the cross direction, the adhesive force after adhesion by an automatic label applicator, and the adhesive force after adhesion by hand.
Fig. 6 is a diagram provided to explain the relationship between the Gurley bending resistance in the machine direction and peelability.
Figs. 7(a) to 7(d) are diagrams provided to respectively explain the method of using an adhesive sheet for a tire.

MODE(S) FOR CARRYING OUT THE INVENTION

[First embodiment]

An embodiment of the present invention relates to an adhesive sheet for a tire, the adhesive sheet including a substrate and an adhesive layer, in which the Gurley bending resistance of the substrate in the machine direction according to JIS L 1085 (1998) has a value within the range of 0.10 to 0.40 mN.

The first embodiment of the present invention is described specifically below with reference to the drawings.

1. Substrate

The substrate that constitutes the adhesive sheet for a tire of the present invention may be a single-layered substrate or a laminated substrate, as long as it has the particular Gurley bending resistance in the machine direction according to JIS L 1085 (1998).

Furthermore, a single-layered substrate means a substrate composed of a single substrate (may be referred to as first substrate), and a laminated substrate means a substrate in which a Gurley bending resistance-regulated film is laminated on the surface on the opposite side of the surface that is brought into contact with the adhesive layer of the substrate (may be referred to as second substrate), via an interlayer adhesive layer.

Meanwhile, the first substrate and the second substrate may be composed of a substrate only, or may include a vapor deposited metal layer or the like as will be described below.

In the following, the case in which the substrate is a single-layered substrate and the case in which the substrate is a laminated substrate will be separately explained specifically, with reference to the drawings.

(1) Single-layered substrate

(1)-1. Configuration

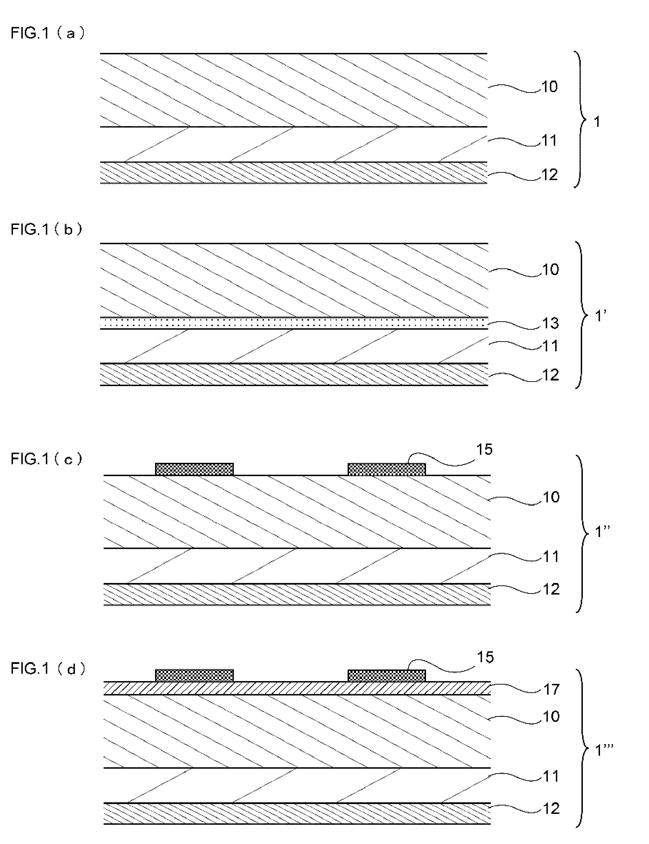

The kind and configuration of the substrate (first substrate) 10 that constitutes a portion of each of the adhesive sheets for tires (1, 1', 1", 1''') illustrated in Figs. 1(a) to 1(d) are not particularly limited, and any known plastic film, paper, a synthetic paper having a cavity internally, or the like can be used.

However, from the viewpoint of having excellent mechanical strength and being capable of effectively preventing destruction of the substrate at the time of detachment, the substrate is more preferably a plastic film or a synthetic paper.

Furthermore, the kind of the plastic film is not particularly limited, and examples thereof include polyethylene terephthalate and polypropylene.

Furthermore, it is preferable to use a plastic film which has a cavity internally, has concavities and convexities provided on the surface, or contains fine particles in the interior.

For example, a plastic film having a cavity internally may be a white expanded polyethylene terephthalate film.

Furthermore, in regard to the configuration of the substrate, as illustrated in Fig. 1(b), it is preferable that the substrate is a substrate 10 including a metal layer 13, for example, a vapor deposited aluminum layer.

The reason for this is that when the adhesive sheet includes a metal layer 13 between such a substrate 10 and the adhesive layer 11, blackening at the substrate surface caused by migration of the constituent components of the tire can be prevented effectively. More specifically, amine-based anti-aging agents, aromatic oils and the like, which are constituent components of the rubber material that constitutes a tire, migrate to the substrate, and due to these components, the substrate surface may be blackened; however, it is intended to block such migration by means of the metal layer 13.

Furthermore, in regard to the configuration of the substrate, it is also preferable to provide a printed layer 15 illustrated in Fig. 1(c), a colored layer 17 intended to facilitate the formation of a printed layer 15 as illustrated in Fig. 1(d), or although not shown in the diagram, a recording layer intended to enable recording such as thermal transfer recording or inkjet recording, or an information region for magnetic recording a bar code, and a micro-semiconductor element, in a portion of the substrate 10.

(1)-2. Thickness

Furthermore, it is preferable that the thickness of the first substrate has a value within the range of 10 to 60 $\mu$m.

The reason for this is that if the thickness of the substrate has a value of below 10 $\mu$m, the substrate becomes too thin so that although the adhesive sheet can be adhered without any problem by hand, the adhesive sheet for a tire may not be sent off in an automatic label applicator. Even if the adhesive sheet could be sent off, it might be difficult to adhere the adhesive sheet so as to conform to the concavities and convexities of the tire surface.

On the other hand, it is because if the thickness of the substrate has a value of above 60 $\mu$m, it is easy to send off the adhesive sheet for a tire by an automatic label applicator; however, since the substrate becomes too thick, it may be difficult to adhere the adhesive sheet so as to conform to the curved surface or concavities and convexities of the tire surface, and the adhesive sheet may be easily peeled off at the time of storage or transportation of the tire.

Therefore, it is more preferable that the thickness of the substrate is adjusted to a value within the range of 23 to 55 $\mu$m, and even more preferably to a value within the range of 25 to 50 $\mu$m.

(2) Laminated substrate

(2)-1. Configuration

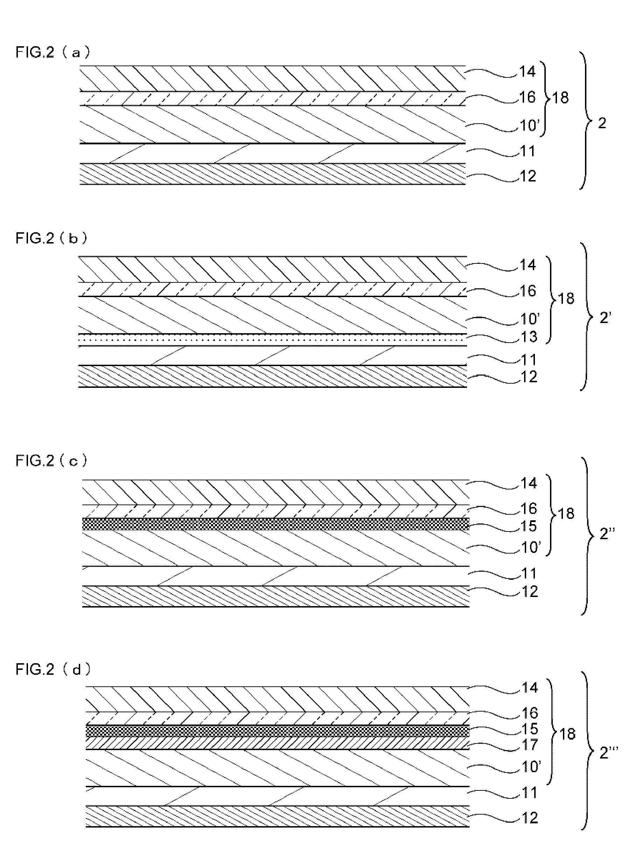

As illustrated in Figs. 2(a) to 2(d), the laminated substrate 18 that constitutes an adhesive sheet for a tire (2, 2', 2", 2''') is formed by laminating a Gurley bending resistance-regulated film 14 on the surface on the opposite side of the surface that is brought into contact with the adhesive layer of the substrate (second substrate) 10', via an interlayer adhesive layer 16.

Meanwhile, since the details of the second substrate are similar to those of the first substrate described above, description thereof will not be repeated here.

(2)-2. Gurley bending resistance-regulated film

The kind and configuration of the Gurley bending resistance-regulated film 14 that constitutes a portion of the adhesive sheets for tires illustrated in Figs. 2(a) to 2(d) are not particularly limited as long as the Gurley hardness of the laminated substrate can be adjusted thereby, and any known plastic film can be used.

The reason for this is that when the Gurley bending resistance-regulated film is a plastic film, the plastic film protects the substrate at the time of storage and transportation of the tire or the like, and attachment of contaminants can be prevented.

Furthermore, it is more preferable that the Gurley bending resistance-regulated film is made of polypropylene or polyethylene terephthalate.

The reason for this is that when the Gurley bending resistance-regulated film is made of polypropylene or polyethylene terephthalate, it is easier to regulate the Gurley bending resistance that will be described below.

Furthermore, it is preferable that the Gurley bending resistance-regulated film is transparent.

The reason for this is that when the Gurley bending resistance-regulated film is transparent, the items described in the printed layer can be made clearly visible.

Furthermore, it is preferable that the thickness of the Gurley bending resistance-regulated film has a value within the range of 10 to 50 $\mu$m.

The reason for this is that if the thickness of the Gurley bending resistance-regulated film has a value of below 10 $\mu$m, when the film is laminated on the substrate, wrinkles are prone to be generated in the Gurley bending resistance-regulated film. On the other hand, it is because the thickness of the Gurley bending resistance-regulated film has a value of above 50 $\mu$m, it may be difficult to regulate the Gurley bending resistance appropriately.

Therefore, it is more preferable that the thickness of the Gurley bending resistance-regulated film has a value within the range of 13 to 40 $\mu$m, and even more preferably to a value within the range of 15 to 35 $\mu$m.

(2)-3. Interlayer adhesive layer

The kind and configuration of the interlayer adhesive layer 16 for laminating the Gurley bending resistance-regulated film 14 and the substrate (second substrate) 10' that constitute a portion of the adhesive sheet for a tire illustrated in Figs. 2(a) to 2(d) are not particularly limited, and known adhesives such as natural rubber-based, acrylic-based, urethane-based, and silicone-based adhesives can be used.

Furthermore, in order to make the items described in the printed layer clearly visible, it is preferable that the interlayer adhesive layer is transparent.

Furthermore, it is preferable that the thickness of the interlayer adhesive layer is within the range of 3 to 50 g/m$^2$.

The reason for this is that if the thickness of the interlayer adhesive layer has a value of below 3 g/m$^2$, the adhesiveness is insufficient, and the Gurley bending resistance-regulated film may be peeled off at the time of storage or transportation. On the other hand, it is because the thickness of the interlayer adhesive layer has a value of above 50 g/m$^2$, run-over of the adhesive or coating unevenness may occur.

Therefore, it is more preferable that the thickness of the interlayer adhesive layer is within the range of 5 to 40 g/m$^2$, and even more preferably within the range of 10 to 30 g/m$^2$.

(2)-4. Thickness

Furthermore, it is preferable that the total thickness of the laminated substrate formed by laminating a Gurley bending resistance-regulated film and an interlayer adhesive layer on a substrate has a value within the range of 33 to 160 $\mu$m.

The reason for this is that if the total thickness of the laminated substrate formed by laminating a Gurley bending resistance-regulated film and an interlayer adhesive layer on a substrate has a value of below 33 $\mu$m, the laminated

substrate formed by laminating a Gurley bending resistance-regulated film and an interlayer adhesive layer on a substrate becomes too thin, so that although there is no problem in adhering the adhesive sheet by hand, the adhesive sheet for a tire may not be sent off by the automatic label applicator. Furthermore, it is because even if the adhesive sheet could be sent off, it might be difficult to adhere the adhesive sheet so as to conform to the concavities and convexities of the tire surface.

On the other hand, it is because if the thickness of the laminated substrate formed by laminating a Gurley bending resistance-regulated film and an interlayer adhesive layer on a substrate has a value of above 160 $\mu$m, it is easier to send off the adhesive sheet for a tire by an automatic label applicator; however, the laminated substrate formed by laminating a Gurley bending resistance-regulated film and an interlayer adhesive layer on a substrate becomes too thick, so that it is difficult to adhere the adhesive sheet so as to conform to the curved surface or concavities and convexities of the tire surface, and the adhesive sheet may be easily peeled off at the time of storage or transportation of the tire.

Therefore, it is more preferable that the total thickness of the laminated substrate formed by laminating a Gurley bending resistance-regulated film and an interlayer adhesive layer on a substrate is adjusted to a value within the range of 50 to 110 $\mu$m, and even more preferably to a value within the range of 60 to 90 $\mu$m.

(3) Gurley bending resistance (machine direction or MD)

Furthermore, the adhesive sheet for a tire is characterized in that the Gurley bending resistance of the substrate in the machine direction according to JIS L 1085 (1998) has a value within the range of 0.10 to 0.40 mN.

The reason for this is that if the Gurley bending resistance in the machine direction has a value of below 0.10 mN, the substrate becomes too soft so that although the adhesive sheet can be adhered without any problem by hand, the adhesive sheet for a tire may not be sent off by an automatic label applicator, and even if the adhesive sheet could be sent off, it might be difficult to adhere the adhesive sheet so as to conform to the concavities and convexities of the tire surface.

On the other hand, it is because if such a Gurley bending resistance in the machine direction has a value of above 0.40 mN, since flexibility of the substrate decreases, it becomes easier to send off the adhesive sheet for a tire by an automatic label applicator; however, it is difficult to adhere the adhesive sheet so as to conform to the concavities and convexities of the tire surface, and the adhesive sheet may be adhered non-uniformly, or may be easily peeled off at the time of storage or transportation of the tire.

Therefore, it is more preferable that the Gurley bending resistance of the substrate in the machine direction according to JIS L 1085 (1998) is adjusted to a value within the range of 0.11 to 0.38 mN, and even more preferably to a value within the range of 0.12 to 0.37 mN.

Meanwhile, when the substrate is a laminated substrate, it is meant that the Gurley bending resistance of the laminated substrate in the machine direction according to JIS L 1085 (1998) has a value within the range described above.

(4) Gurley bending resistance (cross direction or CD)

Furthermore, it is preferable that the Gurley bending resistance of the substrate in the cross direction according to JIS L 1085 (1998) has a value within the range of 0.10 to 0.50 mN.

The reason for this is that when the Gurley bending resistance in the cross direction is adjusted to such a range, the bending resistance in the machine direction as well as in the cross direction can be controlled, and the adhesive sheet can be enabled to conform to even a fine tire or a tire having a large curvature.

That is, it is because the characteristics of the adhesive sheet for a tire can be controlled more reliably, the adhesive sheet can be sent off efficiently by an automatic label applicator, and the adhesive sheet can be suitably adhered so as to conform to the concavities and convexities of the tire surface.

Therefore, it is more preferable that the Gurley bending resistance of the substrate in the cross direction according to JIS L 1085 (1998) is adjusted to a value within the range of 0.13 to 0.48 mN, and even more preferably to a value within the range of 0.15 to 0.47 mN.

Meanwhile, in a case in which the substrate is a laminated substrate, it is meant that the Gurley bending resistance of the laminated substrate in the cross direction according to JIS L 1085 (1998) has a value within the aforementioned range, as described above.

(5) Adhesive force for adhesion by automatic label applicator

Furthermore, it is preferable that the adhesive force according to JIS Z 0237 (2000) against a studless tire having the adhesive sheet for a tire adhered by an automatic label application at an adhesion pressure of 0.5 MPa, has a value within the range of 8 to 15 N/25 mm.

The reason for this is that if the adhesive force of the adhesive sheet for a tire adhered to a tire surface at a predetermined pressure by an automatic label applicator has a value of below 8 N/25 mm, the adhesive sheet for a tire may be easily peeled off at the time of storage or transportation.

On the other hand, it is because if the adhesive force has a value of above 15 N/25 mm, when the adhesive sheet for a tire is peeled off before the tire is used, adhesive residue may be produced on the tire surface, or the adhesive sheet may not be peeled off neatly.

Therefore, it is more preferable that the adhesive force according to JIS Z2037 (2000) against a studless tire having the adhesive sheet for a tire adhered by an automatic label applicator at an adhesion pressure of 0.5 MPa is adjusted to a value within the range of 9 to 13.5 N/25 mm, and even more preferably to a value within the range of 10 to 13 N/25 mm.

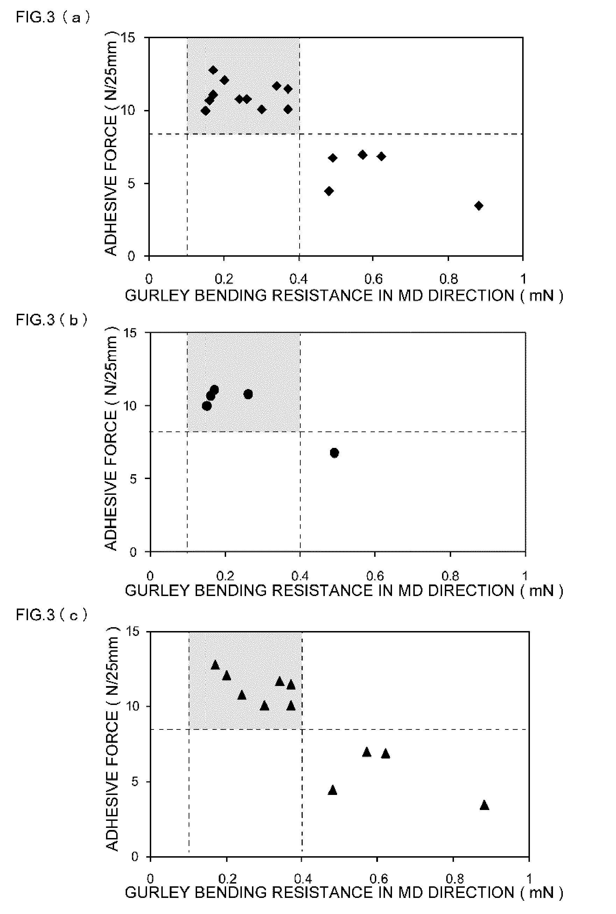

Here, the relationship between the Gurley bending resistance in the machine direction and the adhesive force of the adhesive sheet for a tire obtained by adhesion by an automatic label applicator is explained using Figs. 3(a) to 3(c).

That is, the horizontal axis of Figs. 3(a) to 3(c) represents the Gurley bending resistance in the machine direction, and the vertical axis represents the adhesive force according to JIS Z 0237 (2000) obtainable by adhesion by an automatic label applicator against a studless tire.

Furthermore, Fig. 3(b) shows the relationship between the Gurley bending resistance and the adhesive force in the case in which the substrate is a single-layered substrate; Fig. 3(c) shows the relationship between the Gurley bending resistance and the adhesive force in the case in which the substrate is a laminated substrate; and Fig. 3(a) shows the relationship between the Gurley bending resistance of the substrate and the adhesive force in the case in which these substrates are combined.

From Figs. 3(a) to 3(c), when the Gurley bending resistance in the machine direction is 0.10 to 0.4 mN as explained above, it is clear that an adhesive force of 8 N/25 mm or more is obtained regardless of whether the substrate is a single-layered substrate or a laminated substrate. In other words, it is understood that in order to adhere an adhesive sheet for a tire adequately by an automatic label applicator, it is effective to regulate the Gurley bending resistance.

(6) Adhesive force for adhesion by hand

Furthermore, it is preferable that the adhesive force according to JIS Z 0237 (2000) against a studless tire having an adhesive sheet for a tire adhered by human hand has a value within the range of 8.5 to 13 N/25 mm.

The reason for this is that when the adhesive force of an adhesive sheet for a tire obtainable by adhesion by hand has a value within such a range, even if the adhesive sheet for a tire is adhered to a tire surface by hand, it is easy to adhere the sheet so as to conform to the concavities and convexities and the like of the tire surface, and when the adhesive sheet is peeled off before use, the adhesive sheet can be easily peeled off without generating adhesive residue.

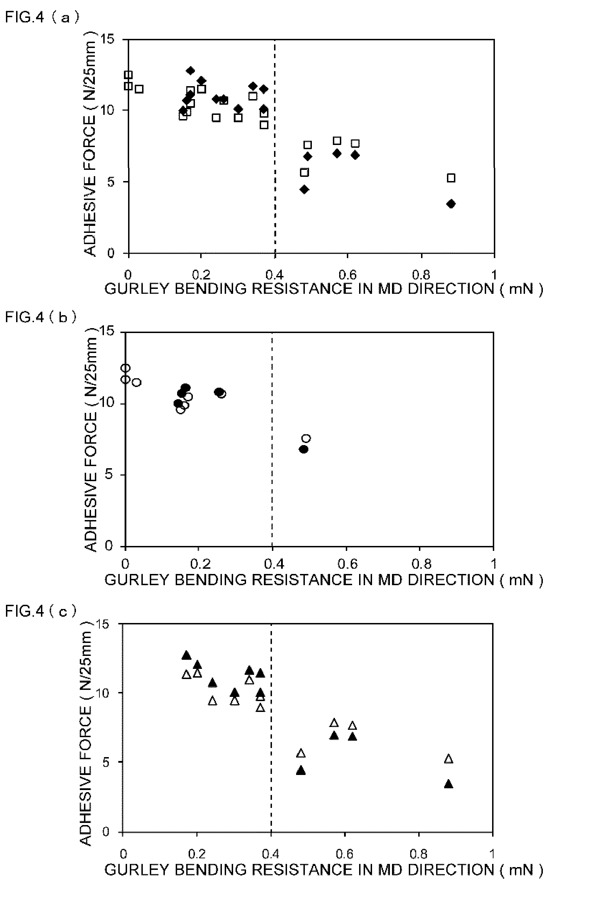

Here, the relationship between the Gurley bending resistance in the machine direction and the adhesive force of an adhesive sheet for a tire upon adhesion by hand and by an automatic label applicator is explained using Figs. 4(a) to 4(c).

That is, the horizontal axis of Figs. 4(a) to 4(c) represents the Gurley bending resistance in the machine direction, and the vertical axis represents the adhesive force according to JIS Z 0237 (2000) against a studless tire.

Furthermore, Fig. 4(b) shows the relationship between the Gurley bending resistance and the adhesive force in the case in which the substrate is a single-layered substrate; Fig. 4(c) shows the relationship between the Gurley bending resistance and the adhesive force in the case in which the substrate is a laminated substance; and Fig. 4(a) shows the relationship between the Gurley bending resistance of the substrate and the adhesive force in the case in which these substrates are combined.

Furthermore, symbols ♦, ●, and ▲ represent distributions showing the adhesive force for adhesion by an automatic label applicator, and symbols □, ○, and △ represent distributions showing the adhesive force for adhesion by hand.

From such distributions, it is understood that, with a Gurley bending resistance in the machine direction of about 0.4 mN being considered as a border, when the Gurley bending resistance in the machine direction is 0.40 mN or less, strong adhesive force is obtained in the case of adhesion by an automatic label applicator, as compared with the case of adhesion by hand, and when the Gurley bending resistance has a value of above 0.40 mN, an adhesive force equal to or larger than the adhesive force in the case of adhesion by hand is obtained.

Furthermore, as explained above, if the bending resistance in the machine direction is too low, sending of a sheet may be difficult in an automatic label applicator.

Therefore, it is understood that when the Gurley bending resistance in the machine direction has a value within the range of 0.10 to 0.40 mN, regardless of whether the substrate is a single-layered substrate or a laminated substrate, the adhesive sheet can be reliably sent off by an automatic label applicator, and an adhesive sheet for a tire can be securely adhered so as to conform to a tire surface having a curved surface and has a large number of concavities and convexities or spews.

Furthermore, on the occasion of automation of the production line, productivity can be increased by decreasing the product yield.

Incidentally, when the Gurley bending resistance is within the range described above, adhesion can be achieved without any problem even in the case of adhering an adhesive sheet for a tire to a tire surface by hand as in conventional cases.

Furthermore, in regard to the method for measuring the Gurley bending resistance and the adhesive force, the Gurley bending resistance and the adhesive force can be measured using a Gurley type tester and an Instron type tensile tester, as will be described in the Examples.

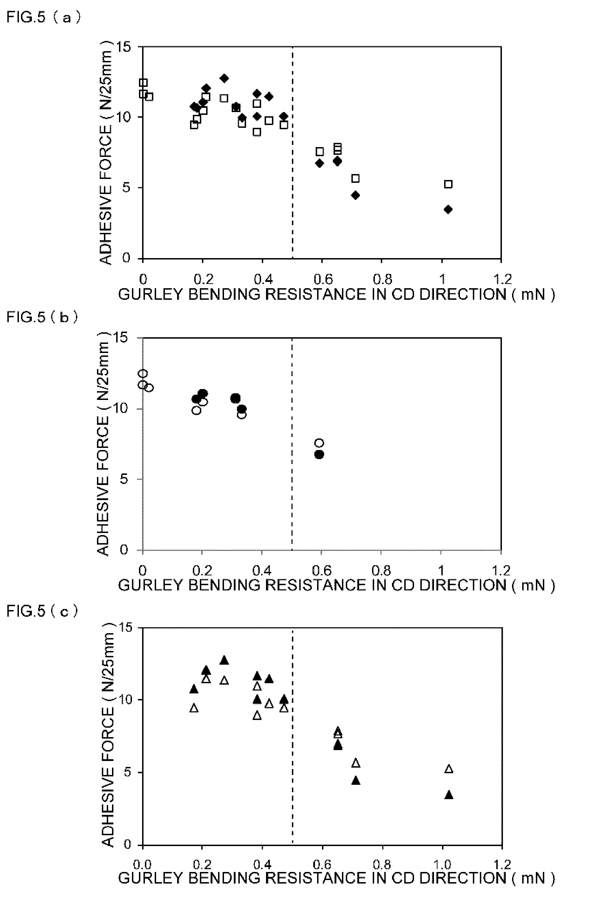

Furthermore, the relationship between the Gurley bending resistance in the cross direction and the adhesive force of an adhesive sheet for a tire for adhesion by hand and by an automatic label applicator is explained using Figs. 5(a) to 5(c).

That is, the horizontal axis in Figs. 5(a) to 5(c) represents the Gurley bending resistance in the cross direction, and the vertical axis represents the adhesive force according to JIS Z 0237 (2000) against a studless tire.

Furthermore, Fig. 5(b) shows the relationship between the Gurley bending resistance and the adhesive force in the case in which the substrate is a single-layered substrate; Fig. 5(c) shows the relationship between the Gurley bending resistance and the adhesive force in the case in which the substrate is a laminated substrate; and Fig. 5(a) shows the relationship between the Gurley bending resistance of the substrate and the adhesive force in the case in which these substrates are combined.

Furthermore, symbols ♦, ●, and ▲ represent distributions showing the adhesive force for adhesion by an automatic label applicator, and symbols □, ○, and △ represent distributions showing the adhesive force for adhesion by hand.

From such distributions, it is understood that, irrespective of whether the substrate is a single-layered substrate or a laminated substrate, the Gurley bending resistance in the cross direction has a tendency similar to that of the Gurley bending resistance in the machine direction described above, with a Gurley bending resistance of about 0.5 mN being considered as a border.

(7) Peelability

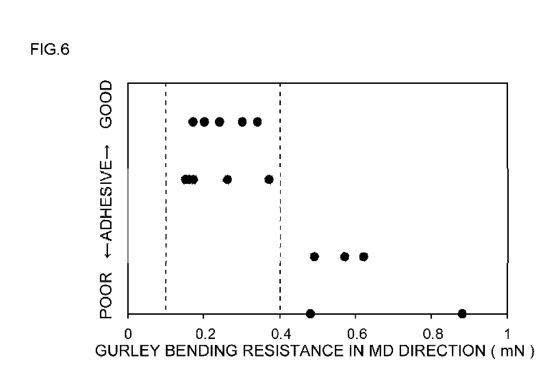

Furthermore, the relationship between the Gurley bending resistance in the machine direction and the adhesive residue at the tire surface obtainable when an adhesive tire for a tire is adhered to a tire surface by an automatic label applicator and stored, and then the adhesive sheet for a tire is peeled off by pulling by hand, is explained using Fig. 6.

That is, the horizontal axis in Fig. 6 represents the Gurley bending resistance in the machine direction, and the vertical axis represents the relative values of adhesive residue on the tire surface.

From Fig. 6, it is understood that if the Gurley bending resistance has a value of below 0.1 mN, it may be difficult to perform adhesion with an automatic label applicator as explained above, and if the Gurley bending resistance has a value of above 0.4 mN, since flexibility of the adhesive sheet for a tire decreases, the adhesive sheet is adhered non-uniformly to a tire surface in many cases, and as a result, adhesive residue is generated to a large extent.

Incidentally, in regard to the method for measuring peelability, as described in the Examples, for example, the extent of adhesive residue can be evaluated by visual inspection.

2. Adhesive layer

The kind of the adhesive that constitutes the adhesive layer is not particularly limited; however, the adhesive is preferably a hot melt type adhesive composition.

The reason for this is that when a hot melt type adhesive composition is used, it is unnecessary to use a solvent or to dry the solvent when the adhesive layer is laminated, and the scale of the production apparatuses can be reduced, or the production time can be shortened.

Furthermore, the kind of the hot melt type adhesive composition is not particularly limited, and for example, conventionally known adhesives such as natural rubber-based, synthetic rubber-based, acrylic-based, urethane-based, and silicone-based adhesives can be used.

Furthermore, a synthetic rubber-based adhesive is preferred, and it is particularly preferable to use an ABA type block copolymer.

Here, an ABA type block copolymer is a copolymer obtained by polymerizing blocks of two kinds of homopolymers of component A and component B, and if the component A is a resin component, and the component B is a rubber component, the ABA type block copolymer has a structure in which two ends of the rubber component (component B) are constrained by domains of the resin component (component A).

Typical examples of such an ABA type block copolymer include a styrene-isoprene-styrene copolymer (SIS) and a styrene-butadiene-styrene copolymer (SBS); however, from the viewpoint that tackiness can be imparted easily, and regulation of the loop tackiness adhesive force at a low temperature is far easier, it is more preferable to use a styrene-isoprene-styrene copolymer (SIS).

Furthermore, it is preferable that ABA type triblock copolymers include diblock copolymers, which are AB type block copolymers.

Meanwhile, in a case in which the ABA type block copolymer is a styrene-isoprene-styrene copolymer (SIS), the AB type block copolymer is preferably a styrene-isoprene block copolymer (SI) of the same kind.

Furthermore, on the occasion of configuring a hot melt type adhesive composition, it is preferable to add a tackifier. Here, the kind of the tackifier is not particularly limited, and the tackifier may be, for example, at least one kind selected from a rosin derivative, a polyterpene resin, an aromatic modified terpene resin and a hydride thereof, a terpene-phenol resin, a coumarone-indene resin, an aliphatic petroleum-based resin, an aromatic petroleum resin and a hydride thereof, and an oligomer of styrene or substituted styrene.

Furthermore, in regard to the kind of the tackifier, regulation of the loop tack adhesive force is made easier by being selectively compatibilized in the rubber region within a block copolymer. Therefore, for example, from the viewpoint of being easily compatibilized in a polyisoprene region or the like, a rosin derivative, a polyester resin, an aliphatic petroleum resin and the like are more suitably used.

Furthermore, regarding the tackifier, it is preferable to use two or more kinds of tackifiers having different softening points in combination. The reason for this is that although a tackifying resin having a relatively high softening point is effective in exhibiting adhesiveness at a high temperature, since the adhesiveness at a low temperature of the tackifying resin is impaired, the hot melt type adhesive composition can cope with a wide temperature range from a low temperature region to a high temperature region by using the tackifying resin having a relatively high softening point in combination with a tackifier having a relatively low softening point.

Incidentally, in regard to the tackifier, although the results of particular combinations only are described in the Examples, it has been confirmed that even if the tackifying resin is modified, the Gurley bending resistance and the adhesive force have a tendency such as described above.

Furthermore, on the occasion of configuring a hot melt type adhesive composition, it is also preferable to add thereto conventionally known additives such as a plasticizer, various additives, for example, a filler, inorganic particles, organic particles, a weight reducing agent, a fluidizing agent, a pigment, a dye, a colorant, an oxidation inhibitor, an ultraviolet absorber, and a photostabilizer, as necessary.

3. Release sheet

Furthermore, the adhesive sheet for a tire of the present invention may be provided with a release sheet 12 for the purpose of protecting the adhesive layer, or the like. The release sheet 12 is not particularly limited, and examples of the release sheet that can be used include resin films formed from resins, such as polyesters such as polyethylene terephthalate, and polyolefins such as polypropylene and polyethylene; release-treated resin films obtained by treating those resin films with release agents such as silicone resin-based and fluororesin-based agents, and long chain alkyl group-containing carbamate; and papers obtained by release-treating papers such as glassine paper, clay-coated paper and laminate paper, with the aforementioned release agents, and applying silicone on the release-treated paper surfaces.

[Second embodiment]

A second embodiment relates to a method of producing an adhesive sheet for a tire, which includes a substrate and an adhesive layer, and in which the Gurley bending resistance of the substrate in the machine direction according to JIS L 1085 (1998) has a value within the range of 0.10 to 0.40 mN,

the method including the following steps (1) and (2):

(1) a step of preparing a substrate and an adhesive layer; and
(2) a step of forming the adhesive layer on the substrate.

In the following, since the details related to the substrate and the adhesive layer adhesive layer to be used are similar to those according to the first embodiment, matters related to the method of producing an adhesive sheet for a tire will be mainly described.

1. Step (1): Step of preparing substrate and adhesive layer

Step (1) is a step of preparing a substrate whose Gurley bending resistance in the machine direction according to JIS L 1085 (1998) has a value within the range of 0.10 to 0.40 mN, and an adhesive layer.

Incidentally, the predetermined configurations of the substrate, the adhesive and the like are as already described above, and therefore, further description will not be repeated.

2. Step (2): Step of forming adhesive sheet for tire

Step (2) is a step of forming an adhesive layer on a substrate to obtain an adhesive sheet for a tire.

Here, the method for forming an adhesive layer on a substrate is not particularly limited; however, for example, it is preferable to employ a transfer coating method of applying a hot melt type adhesive composition on a release sheet, drying the adhesive composition as necessary, and thereby bonding the dried product with the surface substrate.

Furthermore, it is also preferable to employ a direct coating method of first directly applying a hot melt type adhesive composition on a surface substrate, drying the adhesive composition as necessary, and thereby bonding the adhesive composition with a release sheet.

There are no particular limitations on the apparatus for applying the hot melt type adhesive composition, and the adhesive composition can be applied using a conventionally known coating machine such as a roll coater, a knife coater, a bar coater, a die coater, an air knife coater, a gravure coater, a vario-gravure coater, or a curtain coater.

Furthermore, in regard to the coating amount of the hot melt type adhesive composition, it is preferable that the coating amount is adjusted to a value within the range of 20 to 120 $g/m^2$ as a weight per unit area. The reason for this is that if such a coating amount has a value of below 20 $g/m^2$, the adhesiveness to the tire may be insufficient, and on the other hand, if the coating amount is above 120 $g/m^2$, the large amount may cause oozing, and the possibility of causing inconvenience at the time of printing/punching processing may increase.

Furthermore, it is more preferable that the coating amount of the hot melt type adhesive composition is adjusted to a value within the range of 30 to 80 $g/m^2$.

When an adhesive composition containing an ABA type block copolymer as a main component is used, the adhesive composition can be directly molded and used as a hot melt type adhesive composition, due to the nature of the composition. Therefore, a hot melt type adhesive composition that has been molded into a predetermined shape can be first hot melted, subsequently applied in a solution state, and solidified using a known coating machine, and thereby an adhesive layer can be obtained.

From this viewpoint, adhesive sheets for tires are usually used in high coating amounts, for example, in amounts that produce a thickness of 60 $g/m^2$ or the like, in many cases. Thus, there is a risk that when solvent type adhesives are used, the drying process may be a rate-limiting factor for the production rate. In this regard, when a hot melt type adhesive composition that does not require a drying process is used and applied, the coating rate increases significantly, and cost reduction in production can also be achieved. Furthermore, when a hot melt type adhesive composition is used, since a solvent is not at all used or is reduced as much as possible, it is highly advantageous not only from an economical viewpoint but also from the viewpoint of environment protection.

Furthermore, the adhesive sheet for a tire of the present invention can also be used as an adhesive label by subjecting some or all of the layers of the adhesive sheet to punching processing into a label shape.

Also, in order to adhere the adhesive sheet using a labeler, it is common to punch only the substrate and the adhesive layer while leaving the release sheet, and to thereby have the peripheral substrate and adhesive layer removed in advance.

Meanwhile, when the substrate is a laminated substrate, a production method of laminating an adhesive layer on a second substrate, and then further laminating thereon a Gurley bending resistance-regulated film including an interlayer adhesive layer, is preferred.

Here, the method of forming an interlayer adhesive layer on a Gurley bending resistance-regulated film is not particularly limited, and it is acceptable to employ any of the transfer coating method or the direct coating method, both of which have been described above.

Furthermore, the coating apparatus for the interlayer adhesive is not particularly limited, and the interlayer adhesive can be applied using any conventionally known coating machine, as described above.

Incidentally, since the details of the predetermined configurations of the Gurley bending resistance-regulated film, the interlayer adhesive, and the like have already been described, further description will not be repeated.

Furthermore, in regard to the coating amount of the interlayer adhesive layer, it is preferable that the coating amount is adjusted to a value within the range of 3 to 50 $g/m^2$ as a weight per unit area. The reason for this is that if such a coating amount has a value of below 3 $g/m^2$, the adhesive force between the substrate and the Gurley bending resistance-regulated film may be insufficient, and if the coating amount has a value of above 50 $g/m^2$, the large coating amount may cause oozing, and the possibility of causing inconvenience at the time of printing/punching processing may increase.

Furthermore, it is more preferable that the coating amount of the interlayer adhesive is adjusted to a value within the range of 5 to 40 $g/m^2$.

Furthermore, the method of laminating a second substrate and a predetermined Gurley bending resistance-regulated film is not particularly limited, and usually, a substrate laminated with an adhesive layer, and a Gurley bending resistance-regulated film laminated with an interlayer adhesive layer are respectively prepared in roll-shaped products, and the roll-shaped products can be laminated by a roll-to-roll method such that the Gurley bending resistance-regulated film is laminated on the opposite side of the surface where the substrate is brought into contact with the adhesive layer, with the interlayer adhesive layer being interposed there between.

By carrying out production as such, multiple kinds of various adhesive sheets for tires can be produced efficiently.

[Third embodiment]

A third embodiment relates to a method of using an adhesive sheet for a tire, which includes a substrate and adhesive layer, the method including adhering an adhesive sheet for a tire having a substrate whose Gurley bending resistance in the machine direction according to JIS L 1085 (1998) has a value within the range of 0.10 to 0.40 mN, on a ground contact surface or a lateral surface of a tire by hand or by an automatic label applicator.

Hereinafter, the method of using an adhesive sheet for a tire will be explained specifically with reference to the drawings, mainly based on the matters different from the matters described in relation to the first and second embodiments.

1. Adhesion by automatic label applicator

The automatic label applicator for adhering an adhesive sheet for a tire onto a tire surface is not particularly limited; however, examples thereof include a crimping type automatic label applicator, a roller plunger type automatic label applicator, a crimping-air blowing type automatic label applicator, and an air blowing type automatic label applicator.

Here, the method in the case of adhering the adhesive sheet to a tire surface using a roller plunger type automatic label applicator (L-VIS100, manufactured by Lintec Corp.) will be explained below.

(1) Step (1): Peeling of adhesive sheet for tire

Step (1) is a step of peeling an adhesive sheet for a tire from a release sheet.

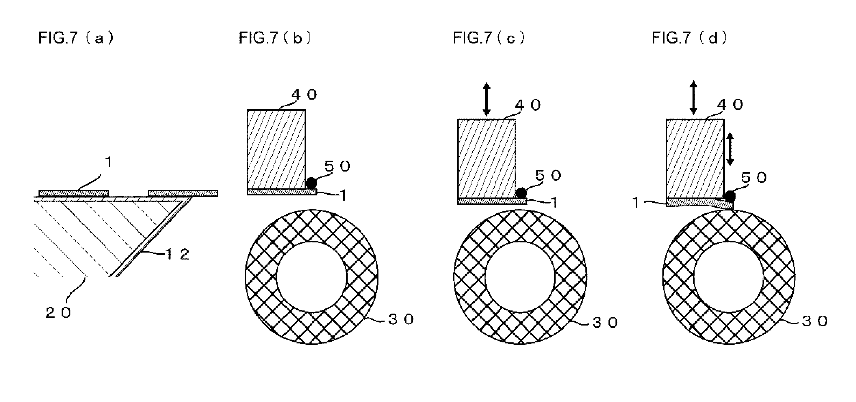

That is, as illustrated in Fig. 7(a), it is preferable that the release sheet 12 is folded back with a peel plate 20, the adhesive sheet is continuously sent out at the peel plate tip, and thereby the release sheet 12 is peeled off from the adhesive sheet for a tire 1.

Meanwhile, the details of the adhesive sheet for a tire and the release sheet are as already described above, and therefore, further description will not be repeated.

(2) Step (2): Adhesive sheet for tire suctioning step

Step (2) is a step of suctioning the adhesive sheet for a tire having the release sheet peeled off therefrom, using a vacuum grid, and transporting the adhesive sheet onto a tire.

That is, as illustrated in Fig. 7(b), it is preferable that an adhesive sheet for a tire is suctioned by a vacuum grid 40 and transported onto a tire 30.

(3) Step (3): Vacuum grid lowering step

Step (3) is a step of lowering the vacuum grid retaining the adhesive sheet for a tire to the vicinity of a tire surface.

That is, as illustrated in Fig. 7(c), it is preferable that the vacuum grid 40 retaining the adhesive sheet for a tire is lowered to transport the adhesive sheet to the vicinity of a tire surface.

(4) Step (4): Roller pressing step

Step (4) is a step of adhering the adhesive sheet for a tire to a grid surface of the tire by means of a roller.

That is, as illustrated in Fig. 7(d), it is preferable that the adhesive sheet for a tire is adhered to the tire surface by applying a predetermined pressure by means of a roller 50.

Here, the conditions for pressure application are not particularly limited; however, it is preferable to apply pressure at a value within the range of 0.3 to 2 MPa.

The reason for this is that when production is conducted under such pressurizing conditions, the adhesive sheet for a tire can be reliably adhered so as to conform to the concavities and convexities of a tire surface or the like.

2. Adhesion by hand

Furthermore, it is also a preferred method of use to using a method of peeling off the release sheet from the adhesive sheet for a tire and directly adhering the adhesive sheet to a grid surface of the adhesive sheet for a tire, by human hand.

EXAMPLES

Hereinafter, the present invention will be described in more detail by way of Examples. However, the following description is intended only for illustrating the present invention, and the present invention is not intended to be limited by this description.

[Example 1]

1. Step of producing adhesive sheet for tire

(1) Adhesive layer preparation step

21.2% by weight of KRATON D-1113 (SIS block copolymer, amount of diblocks: 55% by weight, content of styrene region: 16% by weight, manufactured by Kraton Polymers Japan, Ltd.; hereinafter, may be referred to as D-1113), 45.7% by weight of T-480X (softening point: 80°C, aliphatic/aromatic copolymerized petroleum resin, manufactured by Mitsui Chemicals, Inc.) and 11.3% by weight of PENSEL D-160 (softening point: 150°C or higher, polymerized rosin ester, manufactured by Arakawa Chemical Industries, Ltd.; hereinafter, may be referred to as D-160) as tackifiers, 20.3% by weight of PUREFLEX SNH-100SP (paraffin-based process oil, manufactured by Sankyo Yuka Kogyo K.K.; hereinafter, may be referred to as SNH-100SP) as a plasticizer, and 1.5% by weight of IRGANOX 1010 (hindered phenol-based oxidation inhibitor, manufactured by Ciba Specialty Chemicals Corp.) as an oxidation inhibitor were blended and uniformly mixed, and thus a hot melt type adhesive composition was prepared.

(2) Substrate preparation step

Subsequently, a white expanded polyethylene terephthalate film (CRISPER G2311, manufactured by Toyobo Co., Ltd.) having a thickness of 50 $\mu$m was used as a substrate.

(3) Adhesive sheet for tire forming step

Next, the hot melt type adhesive composition described above was melted under the conditions of 140°C and was applied on a release sheet (SP-8E IVORY, manufactured by Lintec Corp.) using a die coater such that the coating amount was 50 g/m$^2$, and the adhesive composition was bonded with the substrate described above. Thus, a release sheet-attached adhesive sheet for a tire was produced.

2. Evaluation

(1) Evaluation of Gurley bending resistance (machine direction, cross direction)

The substrate before being bonded with the hot melt type adhesive composition was cut to a size of 3.8 cm in length $\times$ 2.5 cm in width.

Next, the specimen was mounted on a Gurley type tester, and in the measurement method according to JIS L 1085 (1998), the scale mark was read at the time when the specimen was separated apart from the pendulum, and thus the Gurley bending resistance was measured according to the following formula. The results thus obtained are presented in Table 1.

$$Br = RG \times (aW_a + bW_b + cW_c) \times (L - 12.7)^2/d \times 3.375 \times 10^{-5}$$

Br : Bending resistance (mN)
RG : Gradation mark when the sample is separated apart from the pendulum (mgf)
a, b, c : Distances from the fulcrum to the respective weight-attaching holes (mm)
$W_a$, $W_b$, $W_c$ : Masses of weights (g)
L : Length of sample (mm)
d : Width of sample (mm)

(2) Adhesive force (adhesion by automatic label applicator)

The adhesive sheet for a tire thus obtained was punched using a die-cut roll into an adhesive label shape having a size of 20 cm in length × 10 cm in width based on the substrate and the adhesive layer, while leaving only the release sheet. The adhesive label was adhered to the ground contact surface (tread surface) of a studless tire (manufactured by Bridgestone Corp., MZ-03) using an automatic label applicator (L-VIS100, manufactured by Lintec Corp.) in an environment at 23°C at an adhesion pressure of 0.5 MPa. After the adhesive label was left to stand for 72 hours in an environment at 23°C, the adhesive label was peeled off at an angle of 180° at a tensile rate of 300 mm/min using an Instron type tensile tester according to JIS Z 0237 (2000) in an environment of 23°C and 50 RH%, and the adhesive force was measured. The results thus obtained are presented in Table 1.

(3) Adhesive force (adhesion by hand)

The adhesive sheet for a tire thus obtained was punched using a die-cut roll into an adhesive label shape having a size of 20 cm in length × 10 cm in width based on the substrate and the adhesive layer, while leaving only the release sheet. The adhesive label was adhered by hand to the ground contact surface (tread surface) of a studless tire (manufactured by Bridgestone Corp., MZ-03) in an environment at 23°C. After the adhesive label was left to stand for 72 hours in an environment at 23°C, the adhesive label was peeled off at an angle of 180° at a tensile rate of 300 mm/min using an Instron type tensile tester according to JIS Z 0237 (2000) in an environment of 23°C and 50 RH%, and the adhesive force was measured. The results thus obtained are presented in Table 1.

(4) Peelability

The adhesive sheet for a tire thus obtained was punched using a die-cut roll into an adhesive label shape having a size of 20 cm in length × 10 cm in width based on the substrate and the adhesive layer, while leaving only the release sheet. The adhesive label was adhered by hand or using an automatic label applicator (L-VIS100) to the ground contact surface (tread surface) of a studless tire (manufactured by Bridgestone Corp., MZ-03) in an environment at 23°C at an application pressure of 0.5 MPa. After the adhesive sheet for a tire was left to stand for 72 hours in an environment at 23°C, the label was peeled off by hand from the tire, and peelability of the adhesive sheet for a tire was evaluated by the following criteria. The results thus obtained are presented in Table 1.

⊙: The adhesive sheet for a tire could be peeled off without leaving any adhesive residue on the tire surface.
○: The adhesive sheet for a tire could be peeled off almost neatly, and the amount of adhesive residue remaining on the tire surface was below 10%.
Δ: The amount of adhesive residue remaining on the tire surface was 10% or more but below 50%.
×: The amount of adhesive residue remaining on the tire surface was 50% or more.

[Example 2]

In Example 2, evaluation was carried out in the same manner as in Example 1, except that a transparent polyethylene terephthalate film (LUMIRROR, manufactured by Toray Industries, Inc., thickness 50 μm; hereinafter, may be referred to as transparent PET) having a white coating layer on one surface and having a vapor deposited aluminum layer on the reverse side of the transparent PET that was brought into contact with the adhesive layer, was used as the substrate instead of the white expanded polyethylene terephthalate film (thickness 50 μm) of Example 1. The results thus obtained are presented in Table 1.

[Example 3]

In Example 3, evaluation was carried out in the same manner as in Example 1, except that a transparent polyethylene terephthalate film (LUMIRROR, manufactured by Toray Industries, Inc., thickness 50 μm) including a vapor deposited aluminum layer on the surface that was brought into contact with the adhesive layer, was used as the substrate instead of the white expanded polyethylene terephthalate film (thickness 50 μm) of Example 1. The results thus obtained are presented in Table 1.

[Example 4]

In Example 4, evaluation was carried out in the same manner as in Example 1, except that a polypropylene white synthetic paper (YUPO SGS60, manufactured by Yupo Corp., thickness 60 μm) was used as the substrate instead of the white expanded polyethylene terephthalate film (thickness 50 μm) of Example 1. The results thus obtained are presented in Table 1.

[Comparative Examples 1 and 2]

In Comparative Examples 1 and 2, evaluation was carried out in the same manner as in Example 1, except that white expanded polyethylene terephthalate films (CRISPER G2311, manufactured by Toyobo Co., Ltd.) having thicknesses of 75 μm and 25 μm, respectively, were used instead of the white expanded polyethylene terephthalate film (thickness 50 μm) of Example 1. The results thus obtained are presented in Table 1.

[Comparative Example 3]

In Comparative Example 3, evaluation was carried out in the same manner as in Example 1, except that a transparent polyethylene terephthalate film (LUMIRROR, manufactured by Toray Industries, Inc., thickness 25 μm) including a vapor deposited aluminum layer was used instead of the white expanded polyethylene terephthalate film (thickness 50 μm) of Example 1. The results thus obtained are presented in Table 1.

[Comparative Example 4]

In Comparative Example 4, evaluation was carried out in the same manner as in Example 1, except that a transparent polyethylene terephthalate film (LUMIRROR, manufactured by Toray Industries, Inc., thickness 25 μm) including a white coating layer on one surface and having a vapor deposited aluminum layer on the other surface of the transparent PET that was brought into contact with the adhesive layer, was used instead of the white expanded polyethylene terephthalate film (thickness 50 μm) of Example 1. The results thus obtained are presented in Table 1.

As a result, in Examples 1 to 3, the Gurley bending resistance had values within predetermined ranges in the machine direction and cross direction, and regardless of whether adhesion was achieved by an automatic label applicator or by hand, the adhesive sheet for a tire could be adhered so as to conform to concavities and convexities, suitable adhesive force could be obtained, and the display could be reliably discriminated.

On the other hand, in Comparative Example 1, the Gurley bending resistance had higher values than the predetermined range both in the machine direction and in the cross direction, and the adhesive force decreased both in adhesion by an automatic label applicator or in adhesion by hand, so that the adhesive sheet was easily detached when the adhesive sheet was peeled off.

Furthermore, in Comparative Examples 2 to 4, the Gurley bending resistance was significantly lower than the predetermined range both in the machine direction and in the cross direction, and the adhesive sheet for a tire could not be sent off by an automatic label applicator. However, the when the adhesive sheet was adhered directly by hand, the adhesive sheet could be adhered without any problem.

[Table1]

Table 1

| | Example 1 | Example 2 | Example 3 | Example 4 | Comparative Example 1 | Comparative Example 2 | Comparative Example 3 | Comparative Example 4 |
|---|---|---|---|---|---|---|---|---|
| Substrate film | White PET | White coating/transparent PET/vapor deposited Al | Transparent PET/vapor deposited Al | White PP | White PET | White PET | Transparent PET/vapor deposited Al | White coating/transparent PET/vapor deposited Al |
| Substrate PET film thickness ($\mu$m) | 50 | 50 | 50 | 60 | 75 | 25 | 25 | 25 |
| Gurley bending resistance (MD) (mN) | 0.16 | 0.26 | 0.17 | 0.15 | 0.49 | <0.02 | <0.02 | 0.03 |
| Gurley bending resistance (CD) (mN) | 0.18 | 0.31 | 0.20 | 0.33 | 0.59 | <0.02 | <0.02 | 0.02 |
| Adhesive force (labeler) (N/25 mm) | 10.7 | 10.8 | 11.1 | 10.0 | 6.8 | -* | -* | -* |
| Adhesive force (by hand) (N/25 mm) | 9.9 | 10.7 | 10.5 | 9.6 | 7.6 | 12.5 | 11.7 | 11.5 |
| Peelability (labeler) | ○ | ○ | ○ | ○ | Δ | -* | -* | -* |
| Peelability (by hand) | ○ | ○ | ○ | ○ | Δ | ⊙ | ⊙ | ⊙ |
| * The adhesive sheet could not be sent off by a labeler. | | | | | | | | |

EP 2 980 177 A1

[Example 5]

In Example 5, evaluation was carried out in the same manner as in Examples 1 to 4, except that an adhesive sheet for a tire was produced using the following laminated substrate as the substrate, and separately, a sheet for Gurley bending resistance evaluation was produced.

In the following, the method of producing an adhesive sheet for a tire of Example 5, and the method of producing a sheet for Gurley bending resistance evaluation are disclosed.

1. Adhesive sheet for tire production step

(1) Adhesive layer preparation step

A hot melt type adhesive composition was prepared in the same manner as in Example 1.

(2) Substrate preparation step

Next, a white expanded polyethylene terephthalate film (CRISPER G2311, manufactured by Toyobo Co., Ltd.) having a thickness of 38 $\mu$m was used as the substrate.

(3) Gurley bending resistance-regulated film preparation step

Next, a transparent polypropylene film (ALPHAN, manufactured by Oji F-Tex Co., Ltd.) having a thickness of 20 $\mu$m was prepared, and this was used as a Gurley bending resistance-regulated film.

(4) Interlayer adhesive preparation step

Next, an acrylic solvent-based adhesive (BPS5213K, manufactured by Toyochem Co., Ltd.) was prepared as an interlayer adhesive.

(5) Substrate and adhesive layer lamination step

Subsequently, the hot melt type adhesive composition described above was melted under the conditions of 140°C, and was applied on a release sheet (SP-8E IVORY, manufactured by Lintec Corp.) such that the coating amount would be 50 g/m$^2$, using a die coater, and the adhesive composition was bonded with the substrate described above.

(6) Gurley bending resistance-regulated film and interlayer adhesive layer lamination step

Separately, the interlayer adhesive described above was applied on a release sheet (SP-8E IVORY, manufactured by Lintec Corp.) such that the coating amount would be 25 g/m$^2$, using a comma coater, and the interlayer adhesive was bonded with the Gurley bending resistance-regulated film.

(7) Adhesive sheet for tire forming step

Next, the release sheet of the Gurley bending resistance-regulated film laminated with the interlayer adhesive layer was peeled off, and the Gurley bending resistance-regulated film was laminated on the surface of the substrate on the opposite side of the surface that was brought into contact with the adhesive. Thus, an adhesive sheet for a tire was obtained.

2. Evaluation

(1) Evaluation of Gurley bending resistance (machine direction, cross direction)

A laminated substrate in which an adhesive layer was not laminated, but a Gurley bending resistance-regulated film was laminated on a substrate with an interlayer adhesive layer interposed therebetween, was used as a sheet for Gurley bending resistance evaluation.

That is, a laminated substrate formed by laminating a Gurley bending resistance-regulated film and an interlayer adhesive layer on a substrate was cut to a size of 3.8 cm in length × 2.5 cm in width.

Next, the Gurley bending resistance was measured in the same manner as in Example 1. The results thus obtained are presented in Table 2.

Incidentally, other evaluations were carried out in the same manner as in Example 1, and thus further description is not repeated here.

[Example 6]

In Example 6, evaluation was carried out in the same manner as in Example 5, except that a transparent polyethylene terephthalate film (LUMIRROR, manufactured by Toray Industries, Inc., thickness 16 $\mu$m) was used as the Gurley bending resistance-regulated film, instead of the transparent polypropylene film (thickness 20 $\mu$m). The results thus obtained are presented in Table 2.

[Example 7]

In Example 7, evaluation was carried out in the same manner as in Example 5, except that a white expanded polyethylene terephthalate film (CRISPER G2311, manufactured by Toyobo Co., Ltd.) having a thickness of 25 $\mu$m was used as the substrate instead of the white expanded polyethylene terephthalate film having a thickness of 38 $\mu$m. The results thus obtained are presented in Table 2.

[Example 8]

In Example 8, evaluation was carried out in the same manner as in Example 5, except that the substrate film was replaced with a white expanded polyethylene terephthalate film having a thickness of 25 $\mu$m, and the Gurley bending resistance-regulated film was replaced with a transparent polyethylene terephthalate film having a thickness of 16 $\mu$m. The results thus obtained are presented in Table 2.

[Example 9]

In Example 9, evaluation was carried out in the same manner as in Example 5, except that the substrate film was replaced with a white expanded polyethylene terephthalate film having a thickness of 25 $\mu$m, and the Gurley bending resistance-regulated film was replaced with a transparent polyethylene terephthalate film having a thickness of 25 $\mu$m. The results thus obtained are presented in Table 2.

[Example 10]

In Example 10, evaluation was carried out in the same manner as in Example 5, except that a film including a vapor deposited aluminum layer on a white expanded polyethylene terephthalate film having a thickness of 25 $\mu$m was used as the substrate instead of the white expanded polyethylene terephthalate film having a thickness of 38 $\mu$m. The results thus obtained are presented in Table 2.

[Example 11]

In Example 11, evaluation was carried out in the same manner as in Example 5, except that the substrate film was replaced with a white expanded polyethylene terephthalate film having a thickness of 25 $\mu$m and including a vapor deposited aluminum layer, and the Gurley bending resistance-regulated film was replaced with a transparent polyethylene terephthalate film having a thickness of 25 $\mu$m. The results thus obtained are presented in Table 2.

[Comparative Example 5]

In Comparative Example 5, evaluation was carried out in the same manner as in Example 5, except that a transparent polyethylene terephthalate film having a thickness of 25 $\mu$m was used as the Gurley bending resistance-regulated film, instead of the polypropylene film having a thickness of 20 $\mu$m. The results thus obtained are presented in Table 3.

[Comparative Example 6]

In Comparative Example 6, evaluation was carried out in Example 5, except that a white expanded polyethylene terephthalate film (CRISPER K2411, manufactured by Toyobo Co., Ltd.) having a thickness of 50 $\mu$m was used as the substrate instead of the white expanded polyethylene terephthalate film having a thickness of 38 $\mu$m. The results thus

obtained are presented in Table 3.

[Comparative Example 7]

In Comparative Example 7, evaluation was carried out in the same manner as in Example 5, except that the substrate film was replaced with a white expanded polyethylene terephthalate film having a thickness of 50 μm, and the Gurley bending resistance-regulated film was replaced with a transparent polyethylene terephthalate film having a thickness of 16 μm. The results thus obtained are presented in Table 3.

[Comparative Example 8]

In Comparative Example 8, evaluation was carried out in the same manner as in Example 5, except that the substrate film was replaced with a white expanded polyethylene terephthalate film having a thickness of 50 μm, and the Gurley bending resistance-regulated film was replaced with a transparent polyethylene terephthalate film having a thickness of 25 μm. The results thus obtained are presented in Table 3.

As a result, in Examples 5 to 11, the Gurley bending resistance had values in the predetermined range in the machine direction and in the cross direction, and the adhesive sheets could be adhered so as to conform to concavities and convexities, regardless of whether the adhesion was achieved by an automatic label applicator or by hand. Furthermore, suitable adhesive force could be obtained, and the display could also be discriminated reliably.

On the other hand, in Comparative Examples 5 to 8, the Gurley bending resistance had values larger than the predetermined range both in the machine direction and in the cross direction, the adhesive force after adhesion by an automatic label applicator decreased. Particularly, in Comparative Example 6 and Comparative Example 8, a particularly large amount of adhesive residue was observed after the adhesive sheets for tires were peeled off.

[Table 2]

Table 2

| | | Example 5 | Example 6 | Example 7 | Example 8 | Example 9 | Example 10 | Example 11 |
|---|---|---|---|---|---|---|---|---|
| Substrate film | Kind | PET | PET | PET | PET | PET | PET/vapor deposited Al | PET/vapor deposited Al |
| | Thickness ($\mu$m) | 38 | 38 | 25 | 25 | 25 | 25 | 25 |
| Gurley bending resistance-regulated film | Kind | PP | PET | PP | PET | PET | PP | PET |
| | Thickness ($\mu$m) | 20 | 16 | 20 | 16 | 25 | 20 | 25 |
| Gurley bending resistance (MD) (mN) | | 0.30 | 0.34 | 0.17 | 0.20 | 0.37 | 0.24 | 0.37 |
| Gurley bending resistance (CD) (mN) | | 0.47 | 0.38 | 0.27 | 0.21 | 0.42 | 0.17 | 0.38 |
| Adhesive force (labeler) (N/25 mm) | | 10.1 | 11.7 | 12.8 | 12.1 | 11.5 | 10.8 | 10.1 |
| Adhesive force (by hand) (N/25 mm) | | 9.5 | 11.0 | 11.4 | 11.5 | 9.8 | 9.5 | 9.0 |
| Peelability (labeler) | | ⊙ | ⊙ | ⊙ | ⊙ | ○ | ⊙ | ○ |
| Peelability (by hand) | | ⊙ | ⊙ | ⊙ | ⊙ | ○ | ⊙ | ○ |

[Table 3]

Table 3

| | | Comparative Example 5 | Comparative Example 6 | Comparative Example 7 | Comparative Example 8 |
|---|---|---|---|---|---|
| Substrate film | Kind | PET | PET | PET | PET |
| | Thickness ($\mu$m) | 38 | 50 | 50 | 50 |
| Gurley bending resistance-regulated film | Kind | PET | PP | PET | PET |
| | Thickness ($\mu$m) | 25 | 20 | 16 | 25 |
| Gurley bending resistance (MD) (mN) | | 0.62 | 0.48 | 0.57 | 0.88 |
| Gurley bending resistance (CD) (mN) | | 0.65 | 0.71 | 0.65 | 1.02 |
| Adhesive force (labeler) (N/25 mm) | | 6.9 | 4.5 | 7.0 | 3.5 |
| Adhesive force (by hand) (N/25 mm) | | 7.7 | 5.7 | 7.9 | 5.3 |
| Peelability (labeler) | | Δ | × | Δ | × |
| Peelability (by hand) | | Δ | Δ | Δ | Δ |

INDUSTRIAL APPLICABILITY

According to the adhesive sheet for a tire, the method of producing an adhesive sheet for a tire, and the method of using an adhesive sheet for a tire of the present invention, when an adhesive sheet for a tire is configured using a substrate having particular Gurley bending resistance, the adhesive sheet for a tire can be firmly adhered to a tire surface so as to conform to concavities and convexities or spews, irrespective of whether being adhered by hand or by an automatic label applicator. Therefore, automation can be promoted in the production process for tires.

Furthermore, in a case in which a laminated substrate obtained by laminating a Gurley bending resistance-regulated film on a substrate is used, the Gurley bending resistance can be regulated easily, and also, the substrate can be protected from contamination and the like at the time of transportation, storage and the like of tires.

Furthermore, the adhesive sheet for a tire can be suitably applied to studless tires, as well as to other various tires for automobiles, aircrafts, bicycles, and wagons.

Also, the adhesive sheet for a tire of the present invention can also be suitably applied to various rubber products other than tires, and it is expected to obtain effects similar to the effects of the present invention.

EXPLANATIONS OF LETTERS OR NUMERALS

| | |
|---|---|
| 1, 1', 1 ", 1'": | Adhesive sheet for tire |
| 2, 2', 2", 2"': | Adhesive sheet for tire |
| 10: | Substrate (single-layered substrate, first substrate) |
| 10': | Substrate (second substrate) |
| 11: | Adhesive layer |
| 12: | Release sheet |
| 13: | Metal layer (vapor deposited aluminum layer) |
| 14: | Gurley bending resistance-regulated film |
| 15: | Printed layer |
| 16: | Interlayer adhesive layer |
| 17: | Colored layer |
| 18: | Laminated substrate |

| 20: | Peel plate |
|---|---|
| 30: | Tire |
| 40: | Vacuum grid |
| 50: | Roller press |

**Claims**

1. An adhesive sheet for a tire, the adhesive sheet comprising a substrate and an adhesive layer, wherein the Gurley bending resistance of the substrate in the machine direction according to JIS L 1085 (1998) has a value within the range of 0.10 to 0.40 mN.

2. The adhesive sheet for a tire according to claim 1, wherein the Gurley bending resistance of the substrate in the cross direction according to JIS L 1085 (1998) has a value within the range of 0.10 to 0.50 mN.

3. The adhesive sheet for a tire according to claim 1 or 2, wherein the adhesive force according to JIS Z 0237 (2000) against a studless tire having the adhesive sheet for a tire adhered by an automatic label applicator at an adhesion pressure of 0.5 MPa, has a value within the range of 8 to 15 N/25 mm.

4. The adhesive sheet for a tire according to any one of claims 1 to 3, wherein the substrate comprises at least a plastic film or a synthetic paper.

5. The adhesive sheet for a tire according to any one of claims 1 to 4, wherein the substrate is a single-layered substrate or a laminated substrate.

6. The adhesive sheet for a tire according to claim 5, wherein when the substrate is the laminated substrate, the substrate comprises at least a Gurley bending resistance-regulated film.

7. The adhesive sheet for a tire according to claim 6, wherein the Gurley bending resistance-regulated film is a polypropylene film or a polyethylene terephthalate film.

8. The adhesive sheet for a tire according to any one of claims 1 to 7, wherein the substrate comprises a colored layer.

9. The adhesive sheet for a tire according to any one of claims 1 to 8, wherein the adhesive layer contains a hot melt type adhesive composition.

10. A method of producing an adhesive sheet for a tire, the adhesive sheet including a substrate and an adhesive layer, wherein the Gurley bending resistance of the substrate in the machine direction according to JIS L 1085 (1998) has a value within the range of 0.10 to 0.40 mN, and the method comprises the following steps (1) and (2):

    (1) a step of preparing the substrate and the adhesive layer; and
    (2) a step of forming the adhesive layer on the substrate.

11. A method of using an adhesive sheet for a tire, the adhesive sheet including a substrate and an adhesive layer, the method comprising adhering an adhesive sheet for a tire having a substrate whose Gurley bending resistance in the machine direction according to JIS L 1085 (1998) has a value within the range of 0.10 to 0.40 mN, to a ground contact surface or a lateral surface of a tire by hand or by an automatic label applicator.

FIG.1（a）

10
11
12
} 1

FIG.1（b）

10
13
11
12
} 1'

FIG.1（c）

15
10
11
12
} 1"

FIG.1（d）

15
17
10
11
12
} 1'"

FIG.2 ( a )

FIG.2 ( b )

FIG.2 ( c )

FIG.2 ( d )

FIG.3 ( a )

FIG.3 ( b )

FIG.3 ( c )

FIG.4 ( a )

FIG.4 ( b )

FIG.4 ( c )

FIG.5（a）

FIG.5（b）

FIG.5（c）

FIG.6

FIG.7（a）　　　　FIG.7（b）　　　　FIG.7（c）　　　　FIG.7（d）

EP 2 980 177 A1

## INTERNATIONAL SEARCH REPORT

| | International application No. |
|---|---|
| | PCT/JP2014/057056 |

### A. CLASSIFICATION OF SUBJECT MATTER
*C09J7/02*(2006.01)i, *B32B27/00*(2006.01)i, *B60C19/00*(2006.01)i, *C09J7/04* (2006.01)i, *C09J201/00*(2006.01)i

According to International Patent Classification (IPC) or to both national classification and IPC

### B. FIELDS SEARCHED

Minimum documentation searched (classification system followed by classification symbols)
C09J1/00-201/10, G09F3/10, B32B27/00, B60C19/00

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2013-194227 A  (Nitto Denko Corp.),<br>30 September 2013 (30.09.2013),<br>claims 1, 5, 7; paragraphs [0001] to [0007],<br>[0059], [0070]<br>(Family: none) | 1-11 |
| A | Edited by Research Group on Plastic Films,<br>'Plastic Film -Kato to Oyo-', 1st edition, 1st<br>print, Kabushiki Kaisha Gihodo, 10 July 1971<br>(10.07.1971), pages 160 to 161, page 161,<br>footnote 9) | 1-11 |
| A | JP 2006-117916 A  (Yupo Corp.),<br>11 May 2006 (11.05.2006),<br>paragraphs [0001], [0030] to [0031]<br>& US 2007/0298228 A1     & EP 1792934 A1<br>& WO 2006/028221 A1     & CN 101023124 A | 1-11 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 June, 2014 (06.06.14) | 17 June, 2014 (17.06.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

International application No.

PCT/JP2014/057056

C (Continuation).  DOCUMENTS CONSIDERED TO BE RELEVANT

| Category* | Citation of document, with indication, where appropriate, of the relevant passages | Relevant to claim No. |
|---|---|---|
| A | WO 2006/070529 A1  (Lintec Corp.),<br>06 July 2006 (06.07.2006),<br>claim 1; paragraphs [0004] to [0005], [0018]<br>& JP 4915920 B          & US 2008/0020203 A1<br>& EP 1780252 A1         & CA 2574053 A<br>& CN 1989215 A          & KR 10-2007-0097402 A<br>& MY 141235 A           & KR 10-1177956 B<br>& TWB 00I393759 | 1-11 |
| A | JP 2002-294187 A  (Daio Paper Corp.),<br>09 October 2002 (09.10.2002),<br>claim 1; paragraphs [0007], [0018]<br>(Family: none) | 1-11 |

Form PCT/ISA/210 (continuation of second sheet) (July 2009)

**EP 2 980 177 A1**

**Patent documents cited in the description**

- WO 2005037945 A
- WO 2006070529 A
- JP 2002294187 A